# EUROPEAN PATENT APPLICATION

(11) **EP 4 290 612 A1**
(43) Date of publication of application: **13.12.2023**
(21) Application number: 22929233.9
(22) Date of filing: 18.03.2022
(51) Int. Cl.: H01M 4/505, H01M 4/525, H01M 4/62, H01M 10/0567

(54) **SECONDARY BATTERY AND BATTERY MODULE, BATTERY PACK AND ELECTRIC DEVICE COMPRISING SAME**

(71) Applicant: Contemporary Amperex Technology Co., Limited, Ningde City, Fujian 352100 (CN)
(72) Inventor: ZHANG, Zhenguo, Ningde City Fujian 352100 (CN); PENG, Chang, Ningde City Fujian 352100 (CN); WANG, Sihui, Ningde City Fujian 352100 (CN); LIU, Na, Ningde City Fujian 352100 (CN); FAN, Jingpeng, Ningde City Fujian 352100 (CN); ZHAO, Dong, Ningde City Fujian 352100 (CN); YAO, Zhijie, Ningde City Fujian 352100 (CN)
(74) Representative: Gerauer, Marc Philippé
(86) International application number: PCT/CN2022/081725
(87) International publication number: WO 2023/173413

(57) **Abstract**

The present application provides a secondary battery and a battery module, battery pack, and electrical device including the same. The secondary battery includes: a positive electrode sheet having a positive electrode active material, and a non-aqueous electrolyte. The positive electrode active material includes a central core material and a modification layer disposed on a surface of the central core material, the modification layer including an orthophosphate with a molecular formula A^{a+}ₓ[PO₄]³⁻_{y}, where A denotes one or more of Li, Na, K, Rb, Cs, Mg, Ca, Ba, Ni, Fe, Co, Ti, Al, Cr, V, Nb, and W, 1≤a≤6, and ax=3y; the non-aqueous electrolyte includes a fluorinated phosphate with a molecular formula B^{b+}ₘ[PO_{1+c}F_{3-c}]^{c-}ₙ, where B denotes one or more of Li, Na, K, Rb, Cs, Mg, Ca, and Ba, 1≤b≤2, c denotes 1 or 2, and bm=cn. The secondary battery of the present application has significantly improved electrochemical performance at high voltages, while also retaining a high energy density.

## Description

### TECHNICAL FIELD

The present application pertains to the technical field of batteries, and particularly relates to a secondary battery and a battery module, battery pack, and electrical device comprising the same.

### BACKGROUND

In recent years, secondary batteries are widely used for energy storage power systems such as hydro-, thermal-, wind-, and solar-power plants, as well as many other fields such as electric tools, electric bicycles, electric motorcycles, electric vehicles, military equipment, and aerospace. With application and promotion of secondary batteries, their energy density is receiving more and more attention. Using a positive electrode active material having a high voltage plateau can effectively improve an energy density of a secondary battery, but will aggravate corrosion of a surface of the positive electrode active material and stripping of a transition metal at a high operating voltage. Therefore, how to enhance stability of the positive electrode active material having a high voltage plateau is a pressing technical problem to be solved.

### SUMMARY

An object of the present application is to provide a secondary battery, and a battery module, battery pack, and electrical device including the same. The secondary battery has significantly improved electrochemical performance at high voltages while also retaining a high energy density.

A first aspect of the present application provides a secondary battery, including: a positive electrode sheet having a positive electrode active material, and a non-aqueous electrolyte, wherein the positive electrode active material includes a central core material and a modification layer disposed on a surface of the central core material, the modification layer including an orthophosphate with a molecular formula A^{a+}ₓ[PO₄]³⁻_{y}, where A denotes one or more of Li, Na, K, Rb, Cs, Mg, Ca, Ba, Ni, Fe, Co, Ti, Al, Cr, V, Nb, and W, 1≤a≤6, and ax=3y; the non-aqueous electrolyte includes a fluorinated phosphate with a molecular formula B^{b+}ₘ[PO_{1+c}F_{3-c}]^{c-}ₙ, where B denotes one or more of Li, Na, K, Rb, Cs, Mg, Ca, and Ba, 1≤b≤2, c denotes 1 or 2, and bm=cn.

When the secondary battery of the present application satisfies both that the positive electrode active material has a modification layer containing an orthophosphate A^{a+}ₓ[PO₄]³⁻_{y} and that the non-aqueous electrolyte includes a fluorinated phosphate B^{b+}ₘ[PO_{1+c}F_{3-c}]^{c-}ₙ, the stripping of a transition metal in the positive electrode active material is reduced, destruction of an SEI film on a surface of a negative electrode active material is reduced, and irreversible consumption of active ions is reduced, so that the secondary battery of the present application has significantly improved electrochemical performance at high voltages, for instance, cycle life and storage life of the secondary battery are significantly increased, and the secondary battery of the present application also retains a high energy density.

In any implementation of the present application, a mass percentage of the orthophosphate is C% based on a total mass of the positive electrode active material, where C is 0.2-20, optionally 1-6. With the mass percentage of the orthophosphate within an appropriate range, better and more complete protection can be provided to the central core material under the premise of not affecting the energy density of the secondary battery, thereby further improving the cycle life and storage life of the secondary battery at high voltages.

In any implementation of the present application, a mass percentage of the fluorinated phosphate is D% based on a total mass of the non-aqueous electrolyte, where D is 0.1-3, optionally 0.5-2. With the mass percentage of the fluorinated phosphate within an appropriate range, dissolution of the orthophosphate can be significantly reduced, providing better protection to the central core material under the premise of not affecting kinetic performance and energy density of the secondary battery, thereby further improving the cycle life and storage life of the secondary battery at high voltages.

In any implementation of the present application, C×D is 0.1-15, optionally 1-5. When the mass percentages of the orthophosphate and the fluorinated phosphate satisfy the above relational expression, better and more complete protection can be provided to the central core material while the secondary battery can retain the high energy density and good kinetic performance.

In any implementation of the present application, a ratio of a mass of element P in the modification layer to the total mass of the positive electrode active material is E%, where E is 0.05-6, optionally 0.2-3. With the mass percentage of the element P within an appropriate range, better and more complete protection can be provided to the central core material under the premise of not affecting the energy density of the secondary battery, thereby further improving the cycle life and storage life of the secondary battery at high voltages.

In any implementation of the present application, the positive electrode active material has a voltage plateau >3.8V vs Li⁺/Li, optionally the voltage plateau ≥4.0V vs Li⁺/Li.

In any implementation of the present application, the central core material includes element Mn, and optionally, a mass percentage of the element Mn is F% based on a total mass of the central core material, where F>25. The central core material of the present application may be a manganese-rich material, which has advantages of high gram capacity and high voltage plateau, and can significantly improve the energy density of the secondary battery.

In any implementation of the present application, the central core material includes one or more of spinel-type lithium manganate LiMₚMn₂₋ₚO₄, lithium manganese phosphate LiN_{q}Mn_{1-q}PO₄, and a layered manganese-rich material Li₁₊ₜMn_{1-w}L_{w}O₂₊ₜ, where 0≤p≤1, 0≤q≤0.5, 0<t<1, 0≤w≤0.5, and M, N, and L each independently denotes one or more of Ni, Co, Fe, Cr, V, Ti, Zr, La, Ce, Rb, P, W, Nb, Mo, Sb, B, Al, and Si. Optionally, the central core material includes one or more of the spinel-type lithium manganate LiMₚMn₂₋ₚO₄ and the layered manganese-rich material Li_{1+c}Mn_{1-w}L_{w}O₂₊ₜ. These central core materials have the advantages of high gram capacity and high voltage plateaus, as well as the advantages of low manufacturing costs, environmental friendliness, and stable intrinsic structure.

In any implementation of the present application, the central core material has a monocrystalline or monocrystalline-like morphology. Particles having a monocrystalline or monocrystalline-like morphology are less prone to fragmentation, so that a probability of a new surface being exposed can be reduced; meanwhile, the central core material having a monocrystalline or monocrystalline-like morphology has better dispersibility, allowing for easier full cladding.

In any implementation of the present application, the modification layer is disposed on 50%-100%, optionally 85%-100%, of the surface of the central core material.

In any implementation of the present application, A denotes one or more of Li, Na, K, Mg, Ni, Co, Ti, Al, Nb, and W, and optionally denotes one or more of Na, K, Ni, Co, Al, Nb, and W. The orthophosphate containing the above-mentioned element(s) itself is also a fast ion conductor, therefore using it as a cladding around the central core material does not significantly reduce an overall capacity of the positive electrode active material, and hence the secondary battery of the present application can retain the advantage of a high energy density. In addition, the orthophosphates containing the above-mentioned element(s) has a relatively low melting point, which helps to protect the central core material more completely.

In any implementation of the present application, the orthophosphate includes one or more of Li₃PO₄, Na₃PO₄, K₃PO₄, Mg₃(PO₄)₂, AlPO₄, Nb₃(PO₄)₅, LiNiPO₄, TiLi₂(PO₄)₂, and LiNi_{0.8}Co_{0.2}PO₄, and optionally includes one or more of Na₃PO₄, K₃PO₄, AlPO₄, Nb₃(PO₄)₅, LiNiPO₄, and LiNi_{0.8}Co_{0.2}PO₄.

In any implementation of the present application, B denotes one or more of Li, Na, K, and Mg, and optionally denotes Na, K, or a combination thereof. The fluorinated phosphate containing the above-mentioned element(s) is slightly soluble in the non-aqueous electrolyte, therefore, when reaching saturation in the non-aqueous electrolyte, the fluorinated phosphate will precipitate and deposit on surfaces of positive and negative electrodes to protect the positive and negative electrodes.

In any implementation of the present application, c denotes 2, in which case the fluorinated phosphate B^{b+}ₘ[PO_{1+c}F_{3-c}]^{c-}ₙ denotes monofluorophosphate B^{b+}ₘ[PO₃F]²⁻ₙ. Compared with difluorophosphate B^{b+}ₘ[PO₂F₂]⁻ₙ (c denotes 1), monofluorophosphate B^{b+}ₘ[PO₃F]²⁻ₙ has lower solubility in solvents (e.g. carbonate solvents, etc.) used in the non-aqueous electrolyte, which can better, on the one hand, reduce the dissolution of the orthophosphate from the modification layer based on a principle of dissolution-precipitation equilibrium, stabilize the modification layer, and reduce the destruction of the modification layer, thus providing better protection for the central core material; on the other hand, the monofluorophosphate is easier to saturate and precipitate in the non-aqueous electrolyte, thus providing better protection for both the positive and negative electrodes, such as further reducing the destruction of the SEI film on the surface of the negative electrode active material, repairing the SEI film, and reducing HF corrosion on the central core material. In addition, the monofluorophosphate B^{b+}ₘ[PO₃F]²⁻ₙ itself has an action of trapping HF, thus the stability of the secondary battery can be further improved, thereby improving the cycle life and storage life of the secondary battery at high voltages.

In any implementation of the present application, the fluorinated phosphate includes one or more of LiPO₂F₂, NaPO₂F₂, KPO₂F₂, Li₂PO₃F, Na₂PO₃F, and K₂PO₃F, and optionally includes one or more of Li₂PO₃F, Na₂PO₃F, and K₂PO₃F.

In any implementation of the present application, the positive electrode active material has a specific surface area less than 1.5 m²/g, optionally being 0.1 m²/g-1 m²/g.

In any implementation of the present application, the positive electrode active material has a volume particle diameter Dv50 of 1 µm-20 µm, optionally 3 µm-15 µm.

A second aspect of the present application provides a battery module, including: the secondary battery of the first aspect of the present application.

A third aspect of the present application provides a battery pack, including: one of the secondary battery of the first aspect of the present application, and the battery module of the second aspect of the present application.

A fourth aspect of the present application provides an electrical device, including at least one of the secondary battery of the first aspect of the present application, the battery module of the second aspect of the present application, and the battery pack of the third aspect of the present application.

The battery module, battery pack and electrical device of the present application include the secondary battery provided by the present application, and thus have at least the same advantages as the secondary battery.

### BRIEF DESCRIPTION OF DRAWINGS

In order to more clearly illustrate technical schemes of embodiments of the present application, the following will give a brief description of the accompanying drawings to be used in the embodiments of the present application. Obviously, the accompanying drawings described below are only some of the implementations of the present application, and for an ordinary person skilled in the art, other drawings can be obtained from the accompanying drawings without any creative effort.
FIG. 1 is a schematic diagram of an implementation of a secondary battery of the present application.
FIG. 2 is a schematic exploded diagram of the implementation of the secondary battery shown in FIG. 1.
FIG. 3 is a schematic diagram of an implementation of a battery module of the present application.
FIG. 4 is a schematic diagram of an implementation of a battery pack of the present application.
FIG. 5 is a schematic exploded diagram of the implementation of the battery pack shown in FIG. 4.
FIG. 6 is a schematic diagram of an implementation of an electrical device that includes the secondary battery of the present application as a power source.

In the drawings, the drawings are not necessarily drawn to actual scale. In the drawings, reference numerals are described as follows: 1 Battery Pack, 2 Upper Case Body, 3 Lower Case Body, 4 Battery Module, 5 Secondary Battery, 51 Shell, 52 Electrode Assembly, 53 Cover Plate.

### DETAILED DESCRIPTION OF EMBODIMENTS

Hereinafter, implementations that specifically disclose the secondary battery of the present application, as well as the battery module, battery pack and electrical device including the same, are described in detail with appropriate reference to the accompanying drawings. However, there will be cases where unnecessary detailed descriptions are omitted. For example, there are cases where detailed descriptions of well-known matters are omitted, and duplicate descriptions of the actually same structure are omitted. This is to avoid the following description becoming unnecessarily verbose for ease of understanding by those skilled in the art. In addition, the drawings and the following description are provided for the full understanding of the present application by those skilled in the art and are not intended to limit the subject matter recited in the claims.

"Range" disclosed herein is defined in the form of a lower limit and an upper limit, a given range being defined by selecting a lower limit and an upper limit that define the boundaries of a particular range. The ranges defined in this manner may include or exclude end values and may be arbitrarily combined, i.e., any lower limit may be combined with any upper limit to form a range. For example, if the ranges 60-120 and 80-110 are listed for a particular parameter, it is understood that the ranges 60-110 and 80-120 are also expected. In addition, if the minimum range values 1 and 2 are listed, and if the maximum range values 3, 4 and 5 are listed, the following ranges can all be expected: 1-3, 1-4, 1-5, 2-3, 2-4 and 2-5. In the present application, unless otherwise noted, the numerical range "a-b" denotes an abbreviated representation of any combination of real numbers between a and b, where both a and b are real numbers. For example, the numerical range "0-5" means that all the real numbers between "0-5" have been listed herein, and "0-5" is only an abbreviated representation of these numerical combinations. In addition, when it is expressed that a parameter is an integer greater than or equal to 2, it is equivalent to disclosing that the parameter is, for example, an integer 2, 3, 4, 5, 6, 7, 8, 9, 10, 11, 12, etc.

Unless otherwise stated, all the implementations and optional implementations of the present application can be combined with one another to form new technical schemes, and such technical schemes shall be deemed to be included in the disclosure of the present application.

Unless otherwise stated, all the technical features and optional technical features of the present application can be combined with one another to form new technical schemes, and such technical schemes shall be deemed to be included in the disclosure of the present application.

Unless specifically stated, all steps of the present application may be performed sequentially or randomly, preferably sequentially. For example, a method including steps (a) and (b) means that the method may include sequentially performed steps (a) and (b), and also may include sequentially performed steps (b) and (a). For example, when mentioning that a method may further include a step (c), it means that the step (c) may be added to the method in any order, for instance, the method may include steps (a), (b) and (c), and may also include steps (a), (c) and (b), and also may include steps (c), (a) and (b).

Unless otherwise specified, references to "including" and "containing" in the present application are open-ended and may also be closed-ended. For example, the "including" and "containing" may indicate that other components not listed may also be included or contained, or only listed components may be included or contained.

Unless specifically stated, the term "or" is inclusive in the present application. For example, the phrase "A or B" means "A, B, or both". More specifically, any of the following conditions satisfies the condition "A or B": A is true (being) and B is false (or not being); A is false (or not being) and B is true (or being); or both A and B are true (or being).

The secondary battery, also known as a rechargeable battery or storage battery, refers to the battery that can continue to be used by activating the active material by charging after the battery is discharged. Usually, a secondary battery includes an electrode assembly and a non-aqueous electrolyte, the electrode assembly including a positive electrode sheet, a negative electrode sheet, and a separator. The positive electrode sheet includes a positive electrode current collector and a positive electrode film layer coated on a surface of the positive electrode current collector, the positive electrode film layer including a positive electrode active material. The negative electrode sheet includes a negative electrode current collector and a negative electrode film layer coated on a surface of the negative electrode current collector, the negative electrode film layer including a negative electrode active material. During the charging and discharging process of the battery, active ions are intercalated and deintercalated back and forth between the positive electrode sheet and the negative electrode sheet. The separator is disposed between the positive electrode sheet and the negative electrode sheet, and mainly plays a role of preventing a short circuit between the positive and negative electrode sheets, while allowing active ions to pass through. The non-aqueous electrolyte plays a role in conducting active ions between the positive and negative electrode sheets.

With application and promotion of secondary batteries, people demand for an increasingly higher energy density on them. An effective way to increase an energy density of a secondary battery is to adopt a positive electrode active material having a high voltage plateau and increase an operating voltage of the secondary battery. However, with an increase of the operating voltage of the secondary battery, the non-aqueous electrolyte is more prone to oxidation and decomposition and generates a large amount of HF, which will corrode the surface of the positive electrode active material and lead to stripping of a large amount of transition metal (such as Mn). The stripping of transition metal results in destruction of a crystal structure of the positive electrode active material, reducing exertion of a capacity of the positive electrode; moreover, the stripping of transition metal also causes migration and deposition of transition metal onto a surface of the negative electrode, destroying a solid non-aqueous electrolyte interphase film (SEI film) on a surface of the negative electrode active material, affecting ion conduction of the SEI film, and further reducing exertion of a capacity of the negative electrode. Therefore, the stripping of transition metal will significantly deteriorate electrochemical performance of the secondary battery and lead to a rapid capacity decay of the secondary battery, and the higher the operating voltage of the secondary battery, the more severe the stripping of transition metal would be, and consequently, a more severe deterioration of the electrochemical performance of the secondary battery.

In order to improve the high-voltage performance of the positive electrode active material, current research efforts are mainly focused on the following points: (1) Providing a non-aqueous electrolyte system that is resistant to high-voltage oxidation; (2) Providing a scheme of doping or cladding modification for the positive electrode active material. However, an existing non-aqueous electrolyte system is almost unavoidable to generate HF at high voltages, and a conventional cladding layer is subject to HF corrosion and dissolves continuously or is unable to provide complete cladding, therefore, the above scheme has a limited effect although it can improve the electrochemical performance to a certain extent.

In view of this, a first aspect of implementations of the present application provides a secondary battery which can maintain good electrochemical performance at high voltages.

### Secondary battery

The secondary battery of the first aspect of the implementations of the present application includes: a positive electrode sheet having a positive electrode active material, and a non-aqueous electrolyte, wherein the positive electrode active material includes a central core material and a modification layer disposed on a surface of the central core material, the modification layer including an orthophosphate with a molecular formula A^{a+}ₓ[PO₄]³⁻_{y}, where A denotes one or more of Li, Na, K, Rb, Cs, Mg, Ca, Ba, Ni, Fe, Co, Ti, Al, Cr, V, Nb, and W, 1≤a≤6, and ax=3y; the non-aqueous electrolyte includes a fluorinated phosphate with a molecular formula B^{b+}ₘ[PO_{1+c}F_{3-c}]^{c-}ₙ, where B denotes one or more of Li, Na, K, Rb, Cs, Mg, Ca, and Ba, 1≤b≤2, c denotes 1 or 2, and bm=cn.

The orthophosphates (e.g., Li₃PO4, etc.) is capable of trapping HF generated in the non-aqueous electrolyte, thereby reducing the HF corrosion on the central core material and the stripping of transition metal. However, in the course of research, the inventor(s) of the present application has accidentally found that the orthophosphate, after trapping HF, will produce fluorinated phosphate (such as monofluorophosphate, difluorophosphate, etc.), and since this fluorinated phosphate is slightly soluble in the solvent (such as carbonate solvent, etc.) used in the non-aqueous electrolyte, the orthophosphate as a modification layer will be continuously consumed until it is completely dissolved in the non-aqueous electrolyte and thus loses its cladding modification effect.

In the secondary battery of the present application, the non-aqueous electrolyte contains the fluorinated phosphate B^{b+}ₘ[PO_{1+c}F_{3-c}]^{c-}ₙ, which, after being slightly dissolved in the non-aqueous electrolyte, ionizes to give [PO₂F₂]⁻ and [PO₃F₁]²⁻ that are identical to the anionic moieties of the reaction products of the orthophosphate A^{a+}ₓ[PO₄]³⁻_{y} yafter trapping HF. Therefore, when the non-aqueous electrolyte contains the fluorinated phosphate B^{b+}ₘ[PO_{1+c}F_{3-c}]^{c-}ₙ, the dissolution of the orthophosphate from the modification layer can be reduced based on a principle of dissolution-precipitation equilibrium, the modification layer can be stabilized, and the destruction of the modification layer can be reduced, thus better protecting the central core material.

Meanwhile, the fluorinated phosphate B^{b+}ₘ[PO_{1+c}F_{3-c}]^{c-}ₙ itself is relatively stable and insensitive to HF and trace water in the non-aqueous electrolyte, therefore, with consumption of the non-aqueous electrolyte and precipitation of the fluorinated phosphate from the surface of the positive electrode active material, the fluorinated phosphate in the non-aqueous electrolyte reaches saturation and subsequently precipitates and deposits on the surfaces of the positive and negative electrodes, thereby providing protection for the positive and negative electrodes, such as reducing the destruction of the SEI film on the surface of the negative electrode active material, repairing the SEI film, and reducing the HF corrosion on the central core material, etc.

In the orthophosphate A^{a+}ₓ[PO₄]³⁻_{y}, A denotes one or more of Li, Na, K, Rb, Cs, Mg, Ca, Ba, Ni, Fe, Co, Ti, Al, Cr, V, Nb, and W. The orthophosphate containing the above-mentioned element(s) itself is also a fast ion conductor, therefore using it as a cladding around the central core material does not significantly reduce an overall capacity of the positive electrode active material, and hence the secondary battery of the present application can retain the advantage of a high energy density. In addition, the orthophosphates containing the above-mentioned element(s) has a relatively low melting point, which helps to protect the central core material more completely. In some embodiments, A denotes one or more of Li, Na, K, Mg, Ni, Co, Ti, Al, Nb, and W. Optionally, A denotes one or more of Na, K, Ni, Co, Al, Nb, and W.

In the fluorinated phosphate B^{b+}ₘ[PO_{1+c}F_{3-c}]^{c-}ₙ, B denotes one or more of Li, Na, K, Rb, Cs, Mg, Ca, and Ba. The fluorinated phosphate containing the above-mentioned element(s) is slightly soluble in the non-aqueous electrolyte, so after reaching saturation in the non-aqueous electrolyte, the fluorinated phosphate will precipitate and deposit on the surfaces of the positive and negative electrodes, thereby providing protection for the positive and negative electrodes. In some embodiments, B denotes one or more of Li, Na, K, and Mg. Optionally, B denotes Na, K, or a combination thereof.

Hence, when the secondary battery of the present application satisfies both that the positive electrode active material has a modification layer containing the orthophosphate A^{a+}ₓ[PO₄]³⁻_{y} and that the non-aqueous electrolyte includes the fluorinated phosphate B^{b+}ₘ[PO_{1+c}F_{3-c}]^{c-}ₙ, the stripping of a transition metal in the positive electrode active material is reduced, destruction of the SEI film on the surface of the negative electrode active material is reduced, and irreversible consumption of active ions is reduced, so that the secondary battery of the present application has significantly improved electrochemical performance at high voltages, for instance, cycle life and storage life of the secondary battery are significantly increased, and the secondary battery of the present application retains a high energy density.

In the orthophosphate A^{a+}ₓ[PO₄]³⁻_{y}, a denotes an average valence of the element A, where 1≤a≤6 and ax=3y to make the orthophosphate A^{a+}ₓ[PO₄]³⁻_{y} electrically neutral.

In some embodiments, the orthophosphate includes one or more of Li₃PO₄, Na₃PO₄, K₃PO₄, Mg₃(PO₄)₂, AlPO₄, Nb₃(PO₄)₅, LiNiP04, TiLi₂(PO₄)₂, and LiNi_{0.8}Co_{0.2}PO₄. Optionally, the orthophosphate includes one or more of Na₃PO₄, K₃PO₄, AlPO₄, Nb₃(PO₄)₅, LiNiPO₄, and LiNi_{0.8}Co_{0.2}PO₄.

In this case, the secondary battery has further improved electrochemical performance at high voltages, for example, the cycle life and storage life of the secondary battery are further increased.

In the fluorinated phosphate B^{b+}ₘ[PO_{1+c}F_{3-c}]^{c-}ₙ, b denotes an average valence of the element B, c denotes a valence of the anion [PO_{1+c}F_{3-c}], where 1≤b≤2, c denotes 1 or 2, and bm=cn to make the fluorinated phosphate B^{b+}ₘ[PO_{1+c}F_{3-c}]^{c-}ₙ electrically neutral.

In some embodiments, b, c, m, and n may all denote 1, that is, B^{b+}ₘ[PO_{1+c}F_{3-c}]^{c-}ₙ may be B⁺[PO₂F₂]⁻, in which case B denotes one or more of Li, Na, K, Rb, and Cs, optionally, B denotes one or more of Li, Na, and K, and further, B denotes Na, K, or a combination thereof.

In some embodiments, c and m may both denote 1, meanwhile b and n may both denote 2, that is, B^{b+}ₘ[PO_{1+c}F_{3-c}]^{c-}ₙ may be B²⁺[PO₂F₂]⁻₂, in which case B denotes one or more of Mg, Ca, and Ba, optionally, B denotes Mg, Ca, or a combination thereof, and further, B denotes Mg.

In some embodiments, c and m may both denote 2, meanwhile b and n may both denote 1, that is, B^{b+}ₘ[PO_{1+c}F_{3-c}]^{c-}ₙ may be B⁺₂[PO₃F]²⁻, in which case B denotes one or more of Li, Na, K, Rb, and Cs, optionally, B denotes one or more of Li, Na, and K, and further, B denotes Na, K, or a combination thereof.

In some embodiments, b and c may both denote 2, meanwhile m and n may both denote 1, that is, B^{b+}ₘ[PO_{1+c}F_{3-c}]^{c-}ₙ may be B²⁺[PO₃F]²⁻, in which case B denotes one or more of Mg, Ca, and Ba, optionally, B denotes Mg, Ca, or a combination thereof, and further, B denotes Mg.

Of course, b, m, and n also may not be integers, for example, B may denote a combination of one or more of Li, Na, K, Rb, and Cs and one or more of Mg, Ca, and Ba.

In some embodiments, c denotes 2, in which case the fluorinated phosphate B^{b+}ₘ[PO_{1+c}F_{3-c}]^{c-}ₙ denotes monofluorophosphate B^{b+}ₘ[PO₃F]²⁻ₙ. Compared with difluorophosphate B^{b+}ₘ[PO₂F₂]⁻ₙ (c denotes 1), monofluorophosphate B^{b+}ₘ[PO₃F]²⁻ₙ has lower solubility in solvents (e.g. carbonate solvents, etc.) used in the non-aqueous electrolyte, which can better, on the one hand, reduce the dissolution of the orthophosphate from the modification layer based on a principle of dissolution-precipitation equilibrium, stabilize the modification layer, and reduce the destruction of the modification layer, thus providing better protection for the central core material; on the other hand, the monofluorophosphate is easier to saturate and precipitate in the non-aqueous electrolyte and subsequently deposit on the surfaces of both the positive and negative electrodes, thus providing better protection for both the positive and negative electrodes, such as further reducing the destruction of the SEI film on the surface of the negative electrode active material, repairing the SEI film, and reducing HF corrosion on the central core material. In addition, the monofluorophosphate B^{b+}ₘ[PO₃F]²⁻ₙ itself has an action of trapping HF, thus the stability of the secondary battery can be further improved, thereby improving the cycle life and storage life of the secondary battery under high voltages.

In some embodiments, the fluorinated phosphate includes one or more of LiPO₂F₂, NaPO₂F₂, KPO₂F₂, Li₂PO₃F, Na₂PO₃F, and K₂PO₃F. Optionally, the fluorinated phosphate includes one or more of Li₂PO₃F, Na₂PO₃F, and K₂PO₃F.

In some embodiments, a mass percentage of the orthophosphate is C% based on a total mass of the positive electrode active material, where C is less than 20. The mass percentage of the orthophosphate should not be too high, otherwise it might significantly reduce the energy density of the secondary battery.

For example, in some embodiments, C may be 0.2, 0.3, 0.5, 1, 2, 3, 4, 5, 6, 8, 10, 12, 14, 16, 18, 20, or in a range formed by any of these values. Optionally, C is 0.2-20, 0.2-16, 0.2-12, 0.2-10, 0.2-8, 0.2-6, 0.2-4, 0.5-20, 0.5-16, 0.5-12, 0.5-10, 0.5-8, 0.5-6, 0.5-4, 1-20, 1-16, 1-12, 1-10, 1-8, 1-6, 1-4, 2-20, 2-16, 2-12, 2-10, 2-8, 2-6, or 2-4. With the mass percentage of the orthophosphate within an appropriate range, better and more complete protection can be provided to the central core material under the premise of not affecting the energy density of the secondary battery, thereby further improving the cycle life and storage life of the secondary battery at high voltages.

In some embodiments, a mass percentage of the fluorinated phosphate is D% based on a total mass of the non-aqueous electrolyte, where D is less than 3. The mass percentage of the fluorinated phosphate should not be too low, otherwise it might not be able to give an effect of reducing the dissolution of the orthophosphate, and hence not be able to protect the surfaces of both the positive and negative electrodes, consequently maybe giving no obvious effect of improving the cycle life and storage life of the secondary battery at high voltages. The mass percentage of the fluorinated phosphate should also not be too high, otherwise it might cause excessive fluorinated phosphate precipitation and deposition onto the surface of the negative electrode, consequently maybe reducing the kinetic performance and energy density of the secondary battery.

For example, in some embodiments, D may be 0.1, 0.2, 0.3, 0.4, 0.5, 0.6, 0.8, 1.0, 1.5, 2.0, 2.5, 3.0, or in a range formed by any of these values. Optionally, D is 0.1-3, 0.1-2.5, 0.1-2, 0.1-1.5, 0.1-1, 0.2-3, 0.2-2.5, 0.2-2, 0.2-1.5, 0.2-1, 0.5-3, 0.5-2.5, 0.5-2, 0.5-1.5, or 0.5-1. With the mass percentage of the fluorinated phosphate within an appropriate range, dissolution of the orthophosphate can be significantly reduced, providing better protection to the central core material under the premise of not affecting kinetic performance and energy density of the secondary battery, thereby further improving the cycle life and storage life of the secondary battery at high voltages.

In some embodiments, C×D is 0.1-15. For example, C × D may be 0.1, 0.2, 0.3, 0.5, 0.8, 1, 2, 3, 4, 5, 6, 7, 8, 9, 10, 11, 12, 13, 14, 15, or in a range formed by any of these values. Optionally, C×D is 0.5-15, 0.5-12, 0.5-10, 0.5-8, 0.5-6, 0.5-5, 0.5-4, 1-15, 1-12, 1-10, 1-8, 1-6, 1-5, or 1-4.

When the mass percentages of the orthophosphate and the fluorinated phosphate satisfy the above relational expression, better and more complete protection can be provided to the central core material while the secondary battery can retain the high energy density and good kinetic performance. When the mass percentage of orthophosphate is relatively low, it will tend to dissolve in the non-aqueous electrolyte after trapping HF, which will soon lead to exposure of the central core material. In such case, a concentration of the fluorinated phosphate in the non-aqueous electrolyte should be appropriately increased, even to a saturation concentration or close to it, which on the one hand can maximally suppress the dissolution of the orthophosphate after trapping HF, and on the other hand can contribute to rapid saturation and deposition of the fluorinated phosphate in the non-aqueous electrolyte onto the surface of the positive electrode active material to form a protective layer prior to exposure of the central core material, thereby reducing the influence of HF on the positive electrode active material and reducing the stripping of transition metal ions. When the mass percentage of the orthophosphate is relatively high, good protection is provided to the central core material and stripping of transition metal ions is relatively reduced. In such case, a concentration of the fluorinated phosphate in the non-aqueous electrolyte should be appropriately decreased to prevent excessive deposition of the fluorinated phosphate onto the surface of the negative electrode from affecting the energy density and kinetic performance of the secondary battery.

In some embodiments, a ratio of a mass of the element P in the modification layer to the total mass of the positive electrode active material is E%, where E is 0.05-6. For example, E may be 0.05, 0.1, 0.2, 0.3, 0.4, 0.5, 0.6, 0.8, 1, 2, 3, 4, 5, 6, or in a range formed by any of these values. Optionally, E is 0.1-6, 0.1-5, 0.1-4, 0.1-3, 0.1-2, 0.1-1, 0.2-6, 0.2-5, 0.2-4, 0.2-3, 0.2-2, or 0.2-1. With the mass percentage of the element P within an appropriate range, better and more complete protection can be provided to the central core material under the premise of not affecting the energy density of the secondary battery, thereby further improving the cycle life and storage life of the secondary battery at high voltages.

In some embodiments, the central core material includes element Mn, and optionally, a mass percentage of the element Mn is F% based on a total mass of the central core material, where F>25. The central core material of the present application may be a manganese-rich material, which has advantages of high gram capacity and high voltage plateau, and can significantly improve the energy density of the secondary battery.

Optionally, the central core material includes, but is not limited to, one or more of spinel-type lithium manganate LiMₚMn₂₋ₚO₄, lithium manganese phosphate LiN_{q}Mn_{1-q}PO₄, and a layered manganese-rich material Li_{1+c}Mn_{1-w}L_{w}O₂₊ₜ, where 0≤p≤1, 0≤q≤0.5, 0≤t≤1, 0<w<0.5, and M, N, and L each independently denotes one or more of Ni, Co, Fe, Cr, V, Ti, Zr, La, Ce, Rb, P, W, Nb, Mo, Sb, B, Al, and Si. Further, the central core material includes one or more of the spinel-type lithium manganate LiMₚMn₂₋ₚO₄ and the layered manganese-rich material Li_{1+c}Mn_{1-w}L_{w}O₂₊ₜ.

These central core materials have the advantages of high gram capacity and high voltage plateaus, as well as the advantages of low manufacturing costs, environmental friendliness, and stable intrinsic structure. However, these central core materials are subject to HF corrosion in the non-aqueous electrolyte, resulting in stripping of a large amount of Mn. By providing, on the surface of the central core material, the modification layer including the orthophosphate A^{a+}ₓ[PO₄]³⁻_{y} and using the fluorinated phosphate B^{b+}ₘ[PO_{1+c}F_{3-c}]^{c-}ₙ in the non-aqueous electrolyte, the HF corrosion on the central core material and the stripping of transition metals such as Mn can be reduced, thus contributing to full exertion of the advantages of high gram capacity and high voltage plateau of the central core material, hence the secondary battery of the present application can have both a high energy density and excellent electrochemical performance.

In some embodiments, p=0.

In some embodiments, q=0.

In some embodiments, t=0, and w=0.

In some embodiments, 0<p<1, and M denotes one or more of Ni, Co, Fe, Cr, V, Ti, Zr, La, Ce, Rb, P, W, Nb, Mo, Sb, B, Al, and Si.

In some embodiments, 0<q<0.5, and N denotes one or more of Ni, Co, Fe, Cr, V, Ti, Zr, La, Ce, Rb, P, W, Nb, Mo, Sb, B, Al, and Si.

In some embodiments, 0<t<1, 0<w<0.5, and L denotes one or more of Ni, Co, Fe, Cr, V, Ti, Zr, La, Ce, Rb, P, W, Nb, Mo, Sb, B, Al, and Si.

When the central core material is doped with an element that has the same or similar properties as the modification layer, bond strength between the central core material and the modification layer can be improved. Meanwhile, the doping element can further stabilize the bulk phase structure of the central core material and reduce the negative effects of HF corrosion.

In addition, a content of the doping element in the central core material should not be too high, otherwise it may significantly reduce the gram capacity of the whole positive electrode active material; moreover, if the content of the doping element is too high, the uniformity of the doping can hardly be guaranteed, which may affect the whole positive electrode active material and the electrochemical performance of the secondary battery.

Exemplarily, the spinel-type lithium manganate LiMₚMn₂₋ₚO₄ may include, but is not limited to, one or more of LiMn₂O₄, LiCr_{0.1}Mn_{1.9}O₄, LiAl_{0.1}Mn_{1.9}O₄, LiNi_{0.4}Mn_{1.6}O₄, LiNi_{0.5}Mn_{1.5}O₄, LiNi_{0.6}Mn_{1.4}O₄, LiNi_{0.4}Cr_{0.4}Mn_{1.4}O₄, LiNi_{0.5}T_{10.1}Mn_{1.4}O₄, LiNi_{0.5}Ti_{0.1}Mn_{1.4}O₄, and LiNi_{0.5}Ti_{0.5}Mn_{1.0}O₄.

Exemplarily, the lithium manganese phosphate LiN_{q}Mn_{1-q}PO₄ may include, but is not limited to, one or more of LiMnPO₄, LiFe_{0.5}Mn_{0.5}PO₄, LiCo_{0.5}Mn_{0.5}PO₄, LiNi_{0.5}Mn_{0.5}PO₄, LiNi_{0.4}Mn_{0.6}PO₄, LiNi_{0.3}Mn_{0.7}PO₄, LiNi_{0.2}Mn_{0.8}PO₄, and LiNi_{0.1}Mn_{0.9}PO₄.

Exemplarily, the layered manganese-rich material Li₁₊ₜMn_{1-w}L_{w}O₂₊ₜ may include, but is not limited to, one or more of LiMnO₂, Li_{1.5}MnI_{2.5}, Li₂MnO₃, Li_{1.5}Co_{0.5}Mn_{0.5}O_{2.5}, Li_{1.2}Ni_{0.3}Mn_{0.7}O_{2.2}, Li_{1.3}Ni_{0.1}Co_{0.1}Fe_{0.1}Mn_{0.7}O_{2.3}, Li_{1.3}Ni_{0.1}Co_{0.1}Mn_{0.8}O_{2.3}, and Li_{1.1}Ni_{0.4}Co_{0.05}Al_{0.05}Mn_{0.5}O_{2.1.}

In some embodiments, the central core material has a monocrystalline or monocrystalline-like morphology. Particles having a monocrystalline or monocrystalline-like morphology are less prone to fragmentation, reducing a probability of a new surface being exposed; meanwhile, the central core material having a monocrystalline or monocrystalline-like morphology has better dispersibility, allowing for easier full cladding.

In some embodiments, the modification layer is disposed on 50%-100% of the surface of the central core material. Optionally, the modification layer is disposed on 85%-100% of the surface of the central core material. Further, the modification layer is disposed on 95%-100% of the surface of the central core material. In particular, the modification layer is disposed on 100% of the surface of the central core material.

In some embodiments, the positive electrode active material has a voltage plateau >3.8V vs Li⁺/Li. Optionally, the positive electrode active material has a voltage plateau >4.OV vs Li⁺/Li.

In the present application, the voltage plateau of the positive electrode active material has a meaning well-known in the art and can be determined by instruments and methods well-known in the art.

In some embodiments, the positive electrode active material has a specific surface area less than 1.5 m²/g. Optionally, the positive electrode active material has a specific surface area of 0.1 m²/g-1 m²/g. When the specific surface area of the positive electrode active material is relatively small, it is helpful to achieve the modification layer with a small content to fully protect the central core material, thus avoiding the use of an excessively thick modification layer that would reduce the kinetic performance and energy density of the secondary battery.

In the present application, the specific surface area of the material has a meaning well-known in the art and can be determined by instruments and methods well-known in the art. For example, with reference to GB/T 19587-2017, the specific surface area can be measured by a method for analysis and determination of specific surface area by nitrogen adsorption and calculated by the Brunauer-Emmett-Teller (BET) method, wherein the analysis and determination of specific surface area by nitrogen adsorption can be performed by a Tri-Star 3020 model specific-surface-area pore size analysis and determination instrument from Micromeritics, Inc., USA.

In some embodiments, the positive electrode active material has a volume particle diameter Dv50 of 1 µm-20 µm. Optionally, the positive electrode active material has a volume particle diameter Dv50 of 3 µm-15 µm. With the volume particle diameter Dv50 of the positive electrode active material within an appropriate range, the positive electrode active material has a relatively small specific surface area, thus helping to achieve the modification layer with a small content to fully protect the central core material. Meanwhile, with the volume particle diameter Dv50 of the positive electrode active material within an appropriate range, it allows for a relatively fast transport of the active ions, thus allowing the positive electrode active material to also retain good kinetic performance at the same time. In addition, with the volume particle diameter Dv50 of the positive electrode active material within an appropriate range, it allows for better homogeneity of a positive electrode slurry and a positive electrode film layer, as well as better processing performance of the positive electrode sheet.

In the present application, the volume particle diameter Dv50 of the material has a meaning well-known in the art, which indicates a particle size corresponding to a cumulative volume distribution percentage of the material reaching 50%, and can be determined by instruments and methods well-known in the art. For example, with reference to Particle-size analysis-Laser diffraction methods according to GB/T 19077-2016, the particle diameter can be conveniently determined using a laser particle-size analyzing instrument (such as Mastersizer 2000E from Malvern Instruments Ltd. in the UK).

In the present application, the central core material can be obtained using a preparation method well-known in the art, such as solid-phase heat treatment. The solid phase heat treatment process is currently the most mature preparation process, which has the advantages of high efficiency, excellent product performance, high degree of control over the microstructure of the product, etc.

In some embodiments, a method of preparing the central core material includes the following steps: mixing various raw materials (e.g., a lithium source, a manganese source, a doping element precursor, etc.) required for preparation of the central core material, then heating up to a temperature T1 for thermal insulation heat treatment, and then cooling down, thus obtaining the central core material.

In order to obtain the central core material with the desired particle size distribution and crystalline morphology, the product obtained by high-temperature sintering can be processed after completion of high-temperature sintering by processes such as crushing, grinding, and ball milling to break down soft agglomerates of particles and improve particle dispersibility.

Optionally, in order to obtain the central core material with the desired particle size distribution and the monocrystalline or monocrystalline-like morphology, T1 may be 900-1100°C. The present application has no particular limitation on the heat treatment time, which may be adjusted according to actual situations, for example, the heat treatment time is 5-40h.

Further, in order to obtain the central core material with the monocrystalline or monocrystalline-like morphology and less oxygen defects, a secondary thermal insulation heat treatment at 500-800°C can be performed, after the first thermal insulation heat treatment at temperature T1. In this case, it is beneficial to reduce oxygen defects formed during high-temperature sintering, thus further improving stability of both bulk phase structure and surface structure of the central core material. The present application has no particular limitation on the secondary thermal insulation heat treatment time, which may be adjusted according to actual situations, for example, the secondary thermal insulation heat treatment time is 5-50h.

In the present application, the positive electrode active material can be obtained using a preparation method well-known in the art, such as a direct cladding method, an in-situ cladding method, etc. The direct cladding method is to mix the orthophosphate A^{a+}ₓ[PO₄]³⁻_{y} with the central core material directly and homogeneously, allowing the orthophosphate A^{a+}ₓ[PO₄]³⁻_{y} to directly form the modification layer on the surface of the central core material. The in-situ cladding method is to homogeneously mix various raw materials used to form the orthophosphate A^{a+}ₓ[PO₄]³⁻_{y} with the central core material, allowing the various raw materials to undergo a chemical reaction to change into the orthophosphate A^{a+}ₓ[PO₄]³⁻_{y}, resulting in in-situ reaction to form the modification layer on the surface of the central core material. The in-situ cladding method can achieve more uniform and complete cladding around the central core material by the modification layer, and allows flexible selection of various raw materials to reduce dependence on a specific material of the modification layer.

During cladding, the various raw materials may be mixed in a manner of dry mixing, or in a manner of liquid phase mixing.

Heat treatment can also be performed during or after cladding to facilitate further diffusion of the modification layer materials, thereby facilitating formation of the modification layer with uniform dispersion and high bond strength to the central core material. Optionally, the heat treatment temperature is 500-1000°C. Optionally, the heat treatment time is 1-50h.

In some embodiments, a method of preparing the positive electrode active material includes the following steps: S101, mixing the central core material (which may be a finished or semi-finished product) with pure water and stirring well to form a suspension; S102, adding the orthophosphate A^{a+}ₓ[PO₄]³⁻_{y} to the suspension obtained from S101 and stirring well, then filtering and drying to obtain a solid powder; and S103, subjecting the solid powder obtained from S102 to heat treatment at 500-1000°C to obtain the central core material having the surface cladded with an orthophosphate A^{a+}ₓ[PO₄]³⁻_{y} modification layer, thereby completing preparation of the positive electrode active material.

Optionally, the heat treatment process in step S103 may also be omitted.

In some embodiments, a method of preparing the positive electrode active material includes the following steps: S201, mixing the central core material (which may be a finished or semi-finished product) with the orthophosphate A^{a+}ₓ[PO₄]³⁻_{y} well by a process such as ball milling or high-energy ball milling to obtain a solid powder; and S202, subjecting the solid powder obtained from S201 to heat treatment at 500-1000°C to obtain the central core material having the surface cladded with an orthophosphate A^{a+}ₓ[PO₄]³⁻_{y} modification layer, thereby completing preparation of the positive electrode active material.

Optionally, the heat treatment process in step S202 may also be omitted.

In some embodiments, a method of preparing the positive electrode active material includes the following steps: S301, mixing the central core material (which may be a finished or semi-finished product) with pure water and stirring well to form a suspension; S302, adding a soluble A source to the suspension obtained by S301 and dispersing it well; S303, dissolving a soluble phosphate in pure water to obtain a phosphate solution; S304, adding the phosphate solution obtained by S303 to the suspension obtained by S302 and stirring continuously until a target orthophosphate A^{a+}ₓ[PO₄]³⁻_{y} product is precipitated and deposited on the surface of the central core material; S305, filtering the suspension obtained by S304 and drying to obtain a solid powder; and S306, subjecting the solid powder obtained by S305 to heat treatment at 500-1000°C to obtain the central core material having the surface cladded with an orthophosphate A^{a+}ₓ[PO₄]³⁻_{y} modification layer, thereby completing preparation of the positive electrode active material.

Optionally, the heat treatment process in step S306 may also be omitted.

Optionally, the soluble A source is one or more of hydroxides, oxides, halides, carbonates, sulfates, nitrates, oxalates, etc. containing the element A, for example, the soluble A source may be lithium hydroxide, sodium chloride, potassium nitrate, and nickel sulfate, etc.

Optionally, the soluble phosphate may include one or more of ammonium phosphate, ammonium hydrogen phosphate, and ammonium dihydrogen phosphate, etc.

In some embodiments, the positive electrode sheet includes: a positive electrode current collector, and a positive electrode film layer provided on at least one surface of the positive electrode current collector and including a positive electrode active material. For example, the positive electrode current collector has two surfaces opposite each other in the direction of its own thickness, and the positive electrode film layer is provided on either or both of the two opposite surfaces of the positive electrode current collector.

The positive electrode film layer of the present application does not exclude other positive electrode active materials other than those mentioned above, and the other positive electrode active materials may be positive electrode active materials known in the art for secondary batteries, such as lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium iron phosphate, and lithium iron phosphate-carbon composite, etc.

In some embodiments, the positive electrode film layer may further optionally include a positive electrode conductive agent. The present application has no particular limitation on the type of the positive conductive agent, and as an example, the positive conductive agent includes one or more of superconductive carbon, conductive graphite, acetylene black, carbon black, Ketjen black, carbon dot, carbon nanotube, graphene, and carbon nanofiber. In some embodiments, a mass percentage of the positive conductive agent is ≤5% based on a total mass of the positive electrode film layer.

In some embodiments, the positive electrode film layer may further optionally include a positive electrode binder. The present application has no particular limitation on the type of the positive electrode binder, and as an example, the positive electrode binder may include one or more of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resins. In some embodiments, a mass percentage of the positive electrode binder is ≤5% based on the total mass of the positive electrode film layer.

In some embodiments, the positive electrode current collector may adopt a metal foil or a composite current collector. As an example of the metal foil, an aluminum foil can be used. The composite current collector may include a polymeric material base layer and a metallic material layer formed on at least one surface of the polymeric material base layer. As an example, the metallic material may be selected from one or more of aluminum, aluminum alloy, nickel, nickel alloy, titanium, titanium alloy, silver, and silver alloy. As an example, the polymeric material base layer may be selected from polypropylene (PP), polyethylene terephthalate (PET), polybutylene terephthalate (PBT), polystyrene (PS), and polyethylene (PE), etc.

The positive electrode film layer is usually made by coating a positive electrode slurry on the positive current collector, then drying, and cold pressing. The positive electrode slurry is typically formed by dispersing the positive electrode active material, the optional conductive agent, the optional binder, and any other components in a solvent and mixing well. The solvent may be, but is not limited to, N-methyl-pyrrolidone (NMP).

In some embodiments, the non-aqueous electrolyte further includes a lithium salt and a non-aqueous solvent. The types and contents of both the lithium salt and the non-aqueous solvent are not specifically limited and may be chosen according to actual needs.

As an example, the lithium salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorodioxalate phosphate (LiDFOP), and lithium tetrafluoroxalate phosphate (LiTFOP).

As an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butyl carbonate (BC), fluorinated ethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the non-aqueous electrolyte may further optionally include additives. For example, the additives may include negative electrode film-forming additives, and may include positive electrode film-forming additives, and also may include additives that can improve certain battery performances, such as additives that improve battery overcharge performance, additives that improve battery high-temperature performance, additives that improve battery low-temperature power performance, etc.

The secondary battery of the present application also includes a negative electrode sheet and a separator.

### [Negative electrode sheet]

In some embodiments, the negative electrode sheet includes: a negative electrode current collector, and a negative electrode film layer provided on at least one surface of the negative electrode current collector and including a negative electrode active material. For example, the negative electrode current collector has two surfaces opposite each other in the direction of its own thickness, and the negative film layer is provided on either or both of the two opposite surfaces of the negative electrode current collector.

The negative electrode active material may adopt a negative electrode active material known in the art for use in secondary batteries. As an example, the negative electrode active material includes, but is not limited to, one or more of natural graphite, artificial graphite, soft carbon, hard carbon, silicon-based material, tin-based material, and lithium titanate. The silicon-based material may include one or more of element silicon, silicon oxide, silicon-carbon complexes, silicon-nitrogen complexes, and silicon alloy materials. The tin-based material may include one or more of elemental tin, tin oxide, and tin alloy material. The present application is not limited to these materials, but may also use other conventional and well-known materials that can be used as negative electrode active materials for secondary batteries. The negative active materials can be used singly or in combination of two or more.

Optionally, the negative electrode active material includes, but is not limited to, one or more of natural graphite, artificial graphite, soft carbon, and hard carbon. These negative electrode active materials have an advantage of high gram capacity, which helps to improve an open circuit voltage and energy density of the secondary battery; meanwhile, these negative electrode active materials have high structural stability, which helps to improve the kinetic performance and long-term cycle stability of the secondary battery.

In some embodiments, the negative electrode film layer may further optionally include a negative electrode conductive agent. The present application has no particular limitation on the type of the negative conductive agent, and as an example, the negative conductive agent may include one or more of superconductive carbon, conductive graphite, acetylene black, carbon black, Ketjen black, carbon dot, carbon nanotube, graphene, and carbon nanofiber. In some embodiments, a mass percentage of the negative conductive agent is ≤5% based on a total mass of the negative electrode film layer.

In some embodiments, the negative electrode film layer may further optionally include a negative electrode binder. The present application has no particular limitation on the type of the negative electrode binder, and as an example, the negative electrode binder may include one or more of styrene-butadiene rubber (SBR), water-soluble unsaturated resin SR-1B, aqueous acrylic resins (such as polyacrylic acid (PAA), polymethacrylic acid (PMAA), and sodium polyacrylate (PAAS)), polyacrylamide (PAM), polyvinyl alcohol (PVA), sodium alginate (SA), and carboxymethyl chitosan (CMCS). In some embodiments, a mass percentage of the negative electrode binder is ≤5% based on the total mass of the negative electrode film layer.

In some embodiments, the negative electrode film layer may further optionally include other auxiliaries. As an example, the other auxiliaries may include thickeners, e.g., sodium carboxymethylcellulose (CMC-Na), PTC thermistor materials, etc. In some embodiments, a mass percentage of the other auxiliaries is ≤2% based on the total mass of the negative electrode film layer.

In some embodiments, the negative electrode current collector may adopt a metal foil or a composite current collector. As an example of the metal foil, a copper foil can be used. The composite current collector may include a polymeric material base layer and a metallic material layer formed on at least one surface of the polymeric material base layer. As an example, the metallic material may be selected from one or more of copper, copper alloy, nickel, nickel alloy, titanium, titanium alloy, silver, and silver alloy. As an example, the polymeric material base layer may be selected from polypropylene (PP), polyethylene terephthalate (PET), polybutylene terephthalate (PBT), polystyrene (PS), and polyethylene (PE), etc.

The negative electrode film layer is usually made by coating a negative electrode slurry on the negative electrode current collector, then drying, and cold pressing. The negative electrode slurry is usually formed by dispersing the negative electrode active material, the optional conductive agent, the optional binder, and the optional other auxiliaries in a solvent and mixing well. The solvent may be, but is not limited to, N-methylpyrrolidone (NMP) or deionized water.

The negative electrode sheet does not exclude other additional functional layers other than the negative electrode film layer. For example, in some embodiments, the negative electrode sheet described in the present application further includes: an electrically conductive undercoat (for example, consisting of a conductive agent and a binder) sandwiched between the negative electrode current collector and the negative electrode film layer and disposed on the surface of the negative electrode current collector. In some other embodiments, the negative electrode sheet described in the present application further includes a protective layer covering the surface of the negative electrode film layer.

### [Separator]

The separator is provided between the positive electrode sheet and the negative electrode sheet, and mainly serves to prevent a short circuit between the positive and negative electrode sheets while allowing active ions to pass through. The present application has no particular limitation on the type of the separator, and the separator may adopt any well-known porous-structure separator having good chemical stability and mechanical stability.

In some embodiments, a material of the separator may include one or more of glass fiber, nonwoven fabric, polyethylene, polypropylene, and polyvinylidene difluoride. The separator may be a single-layer film or a multi-layer composite film. When the separator is the multi-layer composite film, its respective layers are of the same or different materials.

In some embodiments, the positive electrode sheet, the separator, and the negative electrode sheet can be made into an electrode assembly by a winding process or a stacking process.

In some embodiments, the secondary battery may include an outer packaging. The outer packaging can be used to encapsulate the electrode assembly and non-aqueous electrolyte as described above.

In some embodiments, the outer packaging of the secondary battery may be a hard shell, such as a hard plastic shell, an aluminum shell, a steel shell, etc. The outer packaging of the secondary battery may also be a soft packaging, such as a soft pouch packaging. A material of the soft packaging may be plastic, such as one or more of polypropylene (PP), polybutylene terephthalate (PBT), polybutylene succinate (PBS), etc.

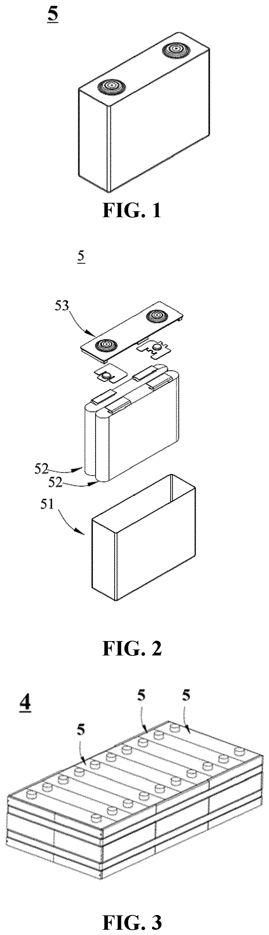

The shape of the secondary battery is not specifically limited in the present application, and may be cylindrical, square or any other shape. As shown in FIG. 1, a secondary battery 5 with a square structure is shown as an example.

In some embodiments, as shown in FIG. 2, the outer packaging may include a shell 51 and a cover plate 53, wherein the shell 51 may include a bottom plate and a side plate connected to the bottom plate, the bottom plate and the side plate enclosing and forming a housing cavity. The shell 51 has an opening in communication with the housing cavity, and the cover plate 53 is used to cover the opening to close the housing cavity. The positive electrode sheet, the negative electrode sheet, and the separator can be form an electrode assembly 52 by a winding process or a stacking process, and the electrode assembly 52 is encapsulated in the housing cavity. A non-aqueous electrolyte infiltrates into the electrode assembly 52. The number of electrode assemblies 52 contained in the secondary battery 5 may be one or more, and is adjustable as needed.

A method of preparing the secondary battery of the present application is well known. In some embodiments, the positive electrode sheet, the separator, the negative electrode sheet, and the non-aqueous electrolyte can be assembled to form a secondary battery. As an example, the positive electrode sheet, the separator, and the negative electrode sheet can form an electrode assembly by a winding process or a stacking process, and the electrode assembly is placed in an outer packaging, then dried and injected with the non-aqueous electrolyte, followed by vacuum encapsulation, resting, formation, shaping and other processes to obtain a secondary battery.

### Battery Module and Battery Pack

In some embodiments of the present application, the secondary batteries according to the present application can be assembled into a battery module, and the number of secondary batteries contained in the battery module can be more than one, and the specific number can be adjusted according to the application and capacity of the battery module.

FIG. 3 is a schematic diagram of a battery module 4 as an example. As shown in FIG. 3, in the battery module 4, a plurality of secondary batteries 5 may be disposed and arranged sequentially along a length of the battery module 4. Of course, they can also be arranged in any other way. Further, the plurality of secondary batteries 5 can be fixed by fasteners.

Optionally, the battery module 4 may also include a housing having an accommodation space in which the plurality of secondary batteries 5 are accommodated.

In some embodiments, the above battery modules may also be assembled into a battery pack, where the number of the battery modules contained in the battery pack may be adjusted according to the application and capacity of the battery pack.

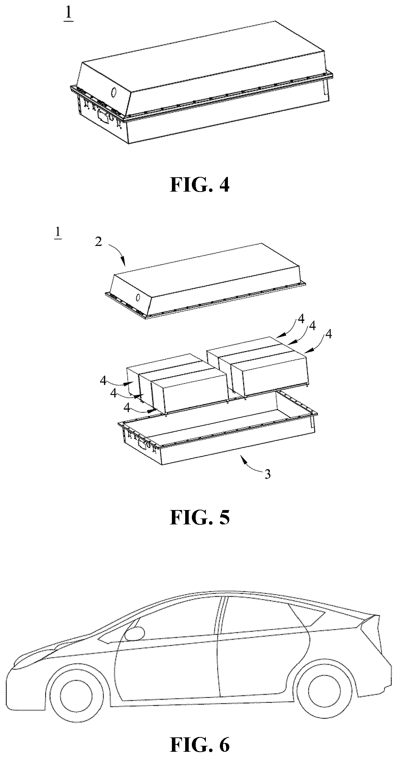

FIGS. 4 and 5 are schematic diagrams of a battery pack 1 as an example. As shown in FIGS. 4 and 5, the battery pack 1 may include a battery case and a plurality of battery modules 4 disposed in the battery case. The battery case includes an upper case body 2 and a lower case body 3, the upper case body 2 being used to cover the lower case body 3 to form an enclosed space for housing the battery modules 4. A plurality of battery modules 4 may be arranged in the battery case in any way.

### Electrical Device

An implementation of the present application also provides an electrical device, including at least one of the secondary battery, the battery module, and the battery pack of the present application. The secondary battery, battery module or battery pack may be used as a power source for the electrical device or as an energy storage unit for the electrical device. The electrical device may be, but is not limited to, mobile equipment (e.g., cell phones, laptops, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, etc.

The electrical device may select a secondary battery, a battery module, or a battery pack according to its usage needs.

FIG. 6 is a schematic diagram of the electrical device as an example. The electric device is a pure electric vehicle, a hybrid electric vehicle, or a plug-in hybrid electric vehicle, etc. To meet high power and high energy density requirements of the electrical device, the electrical device may adopt battery packs or battery modules.

As another example, the electrical device may be a cell phone, a tablet, a laptop, etc. The electrical device is usually required to be light and thin, and thus may adopt a secondary battery as a power source.

### Embodiments

The following embodiments describe disclosure of the present application more specifically, and these embodiments are presented for purposes of illustration only, as various modifications and variations within the scope of the disclosure of the present application will be apparent to a person skilled in the art. Unless otherwise stated, all parts, percentages, and ratios reported in the following embodiments are based on mass, and all reagents used in the embodiments are commercially available or synthesized according to conventional methods and can be used directly without further processing, and the instruments used in the embodiments are all commercially available.

### Embodiment 1

### Preparation of positive electrode active material

Monocrystal particles of a central core material LiNi_{0.5}Mn_{1.5}O₄ were mixed with pure water and stirred well to form a suspension; an orthophosphate Li₃PO₄ was added into the suspension, and stirred well, then filtering and drying were carried out to get a solid powder; the solid powder was subjected to heat treatment at 600°C for 10h to obtain LiNi_{0.5}Mn_{1.5}O₄ having a surface covered with a Li₃PO₄ modification layer. A mass percentage of Li₃PO₄ was 2% based on a total mass of a positive electrode active material, and a ratio of a mass of element P in the modification layer to the total mass of the positive electrode active material was 0.54%.

### Preparation of positive electrode sheet

The above positive electrode active material, a conductive agent (carbon black (Super P)), and a binder (polyvinylidene difluoride (PVDF)) were thoroughly stirred and mixed according to a mass ratio of 96:2.5:1.5 in an appropriate amount of solvent (NMP) to form a uniform positive electrode slurry; the positive electrode slurry was uniformly coated on a surface of a positive electrode current collector (an aluminum foil), then drying and cold pressing were carried out to obtain a positive electrode sheet. A positive electrode active material loading amount on one side of the positive electrode current collector was 0.02 g/cm².

### Preparation of negative electrode sheet

A negative electrode active material, artificial graphite, a conductive agent (carbon black (Super P)), a binder (butadiene rubbera), and a thickener (sodium carboxymethyl cellulose) were thoroughly stirred and mixed in an appropriate amount of solvent (deionized water) according to a mass ratio of 96:1:1:2 to form a uniform negative electrode slurry; the negative electrode slurry was uniformly coated on a surface of a negative electrode current collector (a copper foil), then drying and cold pressing were carried out to obtain a negative electrode sheet. A negative electrode active material loading amount on one side of the negative electrode current collector was 0.008 g/cm².

### Preparation of non-aqueous electrolyte

Ethylene carbonate (EC), methyl ethyl carbonate (EMC), and diethyl carbonate (DEC) were mixed according to a volume ratio of 1:1:1 to obtain an organic solvent, then a sufficiently dried lithium salt LiPF₆ and fluorinated phosphate LiPO₂F₂ were dissolved in the above organic solvent to obtain a non-aqueous electrolyte. A concentration of LiPF₆ was 1 mol/L; a mass percentage of LiPO₂F₂ was 1% based on a total mass of the non-aqueous electrolyte.

### Preparation of separator

A porous polypropylene membrane was used as a separator.

### Preparation of secondary battery

The positive electrode sheet, the separator, and the negative electrode sheet were sequentially stacked and wound to obtain an electrode assembly; the electrode assembly was placed in an outer packaging, dried and injected with the non-aqueous electrolyte, followed by vacuum encapsulation, resting, formation, shaping and other processes to obtain a secondary battery.

### Embodiments 2-31

Preparation methods of secondary batteries were similar to that of Embodiment 1, with a difference lying in different parameters used for preparation of positive electrode active material and non-aqueous electrolyte, see Table 1 for details.

### Comparative Embodiment 1

A preparation method of a secondary battery was similar to that of Embodiment 1, with a difference lying in that: a positive electrode active material used LiNi_{0.5}Mn_{1.5}O₄ directly.

### Comparative Embodiment 2

A preparation method of a secondary battery was similar to that of Embodiment 1, with a difference lying in that: fluorinated phosphate LiPO₂F₂ was not added to a non-aqueous electrolyte.

### Comparative Embodiment 3

A preparation method of a secondary battery was similar to that of Embodiment 31, with differences lying in that: a positive electrode active material used Li_{1.2}Ni_{0.3}Mn_{0.7}O_{2.2} directly, and fluorinated phosphate LiPO₂F₂ was not added to a non-aqueous electrolyte.

**TABLE 1**

| Serial No. | Positive Electrode Active Material | | | | Non-Aqueous Electrolyte | | C×D |
|---|---|---|---|---|---|---|---|
| | Central Core Material | Orthophosphate | C (%) | E (%) | Fluorinated Phosphate | D (%) | |
| Embodime nt 1 | LiNi_{0.5}Mn_{1.5}O₄ | Li₃PO₄ | 2 | 0.54 | LiPO₂F₂ | 1 | 2 |
| Embodime nt 2 | LiNi_{0.5}Mn_{1.5}O₄ | Na₃PO₄ | 2 | 0.38 | NaPO₂F₂ | 1 | 2 |
| Embodime nt 3 | LiNi_{0.5}Mn_{1.5}O₄ | Li₃PO₄ | 0.2 | 0.05 | LiPO₂F₂ | 1 | 0.2 |
| Embodime nt 4 | LiNi_{0.5}Mn_{1.5}O₄ | Na₃PO₄ | 0.5 | 0.09 | NaPO₂F₂ | 1 | 0.5 |
| Embodime nt 5 | LiNi_{0.5}Mn_{1.5}O₄ | Li₃PO₄ | 1 | 0.27 | LiPO₂F₂ | 1 | 1 |
| Embodime nt 6 | LiNi_{0.5}Mn_{1.5}O₄ | Li₃PO₄ | 3 | 0.80 | LiPO₂F₂ | 1 | 3 |
| Embodime nt 7 | LiNi_{0.5}Mn_{1.5}O₄ | Na₃PO₄ | 4 | 0.76 | NaPO₂F₂ | 1 | 4 |
| Embodime nt 8 | LiNi_{0.5}Mn_{1.5}O₄ | Li₃PO₄ | 6 | 1.61 | LiPO₂F₂ | 1 | 6 |
| Embodime nt 9 | LiNi_{0.5}Mn_{1.5}O₄ | Li₃PO₄ | 20 | 5.35 | LiPO₂F₂ | 0.5 | 10 |
| Embodime nt 10 | LiNi_{0.5}Mn_{1.5}O₄ | Li₃PO₄ | 20 | 5.35 | LiPO₂F₂ | 1 | 20 |
| Embodime nt 11 | LiNi_{0.5}Mn_{1.5}O₄ | Li₃PO₄ | 23 | 6.16 | LiPO₂F₂ | 1 | 23 |
| Embodime nt 12 | LiNi_{0.5}Mn_{1.5}O₄ | Li₃PO₄ | 0.1 | 0.03 | LiPO₂F₂ | 1 | 0.1 |
| Embodime nt 13 | LiNi_{0.5}Mn_{1.5}O₄ | Li₃PO₄ | 2 | 0.54 | LiPO₂F₂ | 0.1 | 0.2 |
| Embodime nt 14 | LiNi_{0.5}Mn_{1.5}O₄ | Na₃PO₄ | 2 | 0.38 | NaPO₂F₂ | 0.3 | 0.6 |
| Embodime nt 15 | LiNi_{0.5}Mn_{1.5}O₄ | Li₃PO₄ | 2 | 0.54 | LiPO₂F₂ | 0.5 | 1 |
| Embodime nt 16 | LiNi_{0.5}Mn_{1.5}O₄ | Li₃PO₄ | 2 | 0.54 | LiPO₂F₂ | 1.5 | 3 |
| Embodime nt 17 | LiNi_{0.5}Mn_{1.5}O₄ | Li₃PO₄ | 2 | 0.54 | LiPO₂F₂ | 2 | 4 |
| Embodime nt 18 | LiNi_{0.5}Mn_{1.5}O₄ | Li₃PO₄ | 2 | 0.54 | LiPO₂F₂ | 3 | 6 |
| Embodime nt 19 | LiNi_{0.5}Mn_{1.5}O₄ | Li₃PO₄ | 2 | 0.54 | LiPO₂F₂ | 3.5 | 7 |
| Embodime nt 20 | LiNi_{0.5}Mn_{1.5}O₄ | Li₃PO₄ | 2 | 0.54 | LiPO₂F₂ | 0.05 | 0.1 |
| Embodime nt 21 | LiNi_{0.5}Mn_{1.5}O₄ | Li₃PO₄ | 10 | 2.68 | LiPO₂F₂ | 2 | 20 |
| Embodime nt 22 | LiNi_{0.5}Mn_{1.5}O₄ | Li₃PO₄ | 0.3 | 0.08 | LiPO₂F₂ | 0.2 | 0.06 |
| Embodime nt 23 | LiNi_{0.5}Mn_{1.5}O₄ | Li₃PO₄ | 2 | 0.54 | Li₂PO₃F | 1 | 2 |
| Embodime nt 24 | LiNi_{0.5}Mn_{1.5}O₄ | K₃PO₄ | 2 | 0.54 | K₂PO₃F | 1 | 2 |
| Embodime nt 25 | LiNi_{0.5}Mn_{1.5}O₄ | Mg₃(PO₄)₂ | 2 | 0.47 | LiPO₂F₂ | 1 | 2 |
| Embodime nt 26 | LiNi_{0.5}Mn_{1.5}O₄ | A1P04 | 2 | 0.51 | LiPO₂F₂ | 1 | 2 |
| Embodime nt 27 | LiNi_{0.5}Mn_{1.5}O₄ | Nb₃(PO₄)₅ | 2 | 0.41 | LiPO₂F₂ | 1 | 2 |
| Embodime nt 28 | LiNi_{0.5}Mn_{1.5}O₄ | LiNiP04 | 2 | 0.39 | LiPO₂F₂ | 1 | 2 |
| Embodime nt 29 | LiNi_{0.5}Mn_{1.5}O₄ | TiLi₂(PO₄)₂ | 2 | 0.49 | LiPO₂F₂ | 1 | 2 |
| Embodime nt 30 | LiNi_{0.5}Mn_{1.5}O₄ | LiNi_{0.8}Co_{0.2}PO₄ | 2 | 0.39 | LiPO₂F₂ | 1 | 2 |
| Embodime nt 31 | Li_{1.2}Ni_{0.3}Mn_{0.7}O_{2.2} | Li₃PO₄ | 2 | 0.54 | LiPO₂F₂ | 1 | 2 |
| Comparati ve embodime nt 1 | LiNi_{0.5}Mn_{1.5}O₄ | / | / | / | LiPO₂F₂ | 1 | / |
| Comparati ve embodime nt 2 | LiNi_{0.5}Mn_{1.5}O₄ | Li₃PO₄ | 2 | 0.54 | / | / | / |
| Comparati ve embodime nt 3 | Li_{1.2}Ni_{0.3}Mn_{0.7}O_{2.2} | / | / | / | / | / | / |

### Testing Section

### (1) Testing initial discharge gram capacity of positive electrode active material

Under a temperature of 25°C, a secondary battery was charged with a constant current of 0.3 C to an upper cut-off voltage, and then charged with a constant voltage at that cut-off voltage to a current of 0.05 C; after standing for 5 min, the secondary battery was discharged with a constant current of 0.33 C to a lower cut-off voltage, and a discharge capacity obtained at this time was an initial discharge capacity of the secondary battery.

Initial gram capacity of positive electrode active material (mAh/g) = Initial discharge capacity of secondary battery / Total mass of positive electrode active material.

### (2) Testing high-temperature cycle performance of secondary battery

Under a temperature of 45°C, a secondary battery was charged with a constant current of 0.3 C to an upper cut-off voltage, and then charged with a constant voltage at that cut-off voltage to a current of 0.05 C; after standing for 5 min, the secondary battery was discharged with a constant current of 0.33 C to a lower cut-off voltage, thus completing a charging and discharging cycle, and a discharge capacity obtained at this time was an initial discharge capacity of the secondary battery. The secondary battery was charged and discharged cyclically according to the above method until the discharge capacity decays to 80% of the initial discharge capacity after the cycles, the test was finished, and then the number of cycles of the secondary battery in this test was recorded. The higher the number of cycles of the secondary battery, the longer the expected high-temperature cycle life of the secondary battery.

### (3) Testing high-temperature storage performance of secondary battery

Under a temperature of 25°C, a secondary battery was charged with a constant current of 0.3 C to an upper cut-off voltage, and then charged with a constant voltage at that cut-off voltage to a current of 0.05 C, at which point the secondary battery was in a fully charged state. The fully charged secondary battery was stored under a temperature of 45°C, taken out every 5 days and discharged at a constant current of 0.33 C to a lower cut-off voltage to get a discharging capacity after a period time of storage; then the secondary battery was fully charged in the above way and then stored again under a temperature of 45°C until the discharging capacity of the secondary battery after storage decays to 80% of the initial discharging capacity, the test was finished, and the total storage days of the secondary battery was recorded. The more the number of storage days of the secondary battery, the longer the expected high-temperature storage life of the secondary battery.

In respective performance tests as described above, regarding Embodiments 1-30 and Comparative Embodiments 1-2, the upper cut-off voltage was 4.9 V and the lower cut-off voltage was 3.5 V; regarding Embodiment 31 and Comparative Embodiment 3, the upper cut-off voltage was 4.5 V and the lower cut-off voltage was 2.8 V.

Table 2 shows performance test results for Embodiments 1-31 and Comparative Embodiments 1-3.

**TABLE 2**

| Serial No. | Initial gram capacity (mAh/g) | Number of high-temperature cycles | Number of high-temperature storage days |
|---|---|---|---|
| Embodiment 1 | 132 | 516 | 158 |
| Embodiment 2 | 131 | 534 | 163 |
| Embodiment 3 | 130 | 396 | 124 |
| Embodiment 4 | 128 | 413 | 135 |
| Embodiment 5 | 132 | 459 | 146 |
| Embodiment 6 | 127 | 563 | 174 |
| Embodiment 7 | 125 | 617 | 202 |
| Embodiment 8 | 123 | 652 | 220 |
| Embodiment 9 | 112 | 733 | 247 |
| Embodiment 10 | 107 | 769 | 289 |
| Embodiment 11 | 98 | 758 | 283 |
| Embodiment 12 | 133 | 307 | 98 |
| Embodiment 13 | 132 | 367 | 129 |
| Embodiment 14 | 132 | 396 | 144 |
| Embodiment 15 | 131 | 431 | 152 |
| Embodiment 16 | 130 | 523 | 172 |
| Embodiment 17 | 126 | 539 | 189 |
| Embodiment 18 | 121 | 541 | 196 |
| Embodiment 19 | 113 | 529 | 181 |
| Embodiment 20 | 131 | 315 | 94 |
| Embodiment 21 | 113 | 672 | 235 |
| Embodiment 22 | 128 | 224 | 79 |
| Embodiment 23 | 133 | 631 | 194 |
| Embodiment 24 | 130 | 679 | 221 |
| Embodiment 25 | 127 | 498 | 144 |
| Embodiment 26 | 129 | 542 | 188 |
| Embodiment 27 | 128 | 793 | 304 |
| Embodiment 28 | 133 | 733 | 260 |
| Embodiment 29 | 135 | 439 | 124 |
| Embodiment 30 | 134 | 688 | 238 |
| Embodiment 31 | 217 | 544 | 178 |
| Comparative embodiment 1 | 133 | 189 | 61 |
| Comparative embodiment 2 | 132 | 220 | 79 |
| Comparative embodiment 3 | 214 | 159 | 98 |

From the test results of Embodiments 1-30 vs. Comparative Embodiments 1-2 and Embodiment 31 vs. Comparative Embodiment 3, it can be seen that when a secondary battery satisfies both that the positive electrode active material has a modification layer containing orthophosphate and that the non-aqueous electrolyte contains fluorinated phosphate, its cycle life and storage life at high voltages are significantly increased, and it can also retain a high energy density. A possible reason for that lies in the fact that when the secondary battery satisfies both that the positive electrode active material has a modification layer containing orthophosphate and that the non-aqueous electrolyte contains fluorinated phosphate, stripping of transition metals from the positive electrode active material is reduced, destruction of an SEI film on a surface of the negative electrode active material is reduced, and irreversible consumption of active ions is reduced, thereby allowing better exertion of the advantages of high gram capacity and high voltage plateau of the positive electrode active material.

From the test results of Embodiments 1-12, it can be seen that when a mass percentage of the orthophosphate is within an appropriate range, the central core material can be better and more completely protected under the premise of not affecting the energy density of the secondary battery, thereby further improving the cycle life and storage life of the secondary battery at high voltages.

From the test results of Embodiments 13-20, it can be seen that when a mass percentage of the fluorinated phosphate is within an appropriate range, dissolution of the orthophosphate can be significantly reduced, thus providing better protection to the central core material under the premise of not affecting the energy density of the secondary battery, thereby further improving the cycle life and storage life of the secondary battery at high voltages.

From the test results of Embodiments 1-22, it can also be seen that when the contents of both the orthophosphate and the fluorinated phosphate further satisfy that C×D is between 0.1 and 15, the dissolution of the orthophosphate can be further reduced, thus providing better and more complete protection to the central core material, thereby further improving the cycle life and storage life of the secondary battery under the premise of retaining a high energy density.

It should be noted that the present application is not limited to the above embodiments. The above-mentioned embodiments are only exemplary illustrative purpose, and the embodiments having substantially the same structure as the technical idea and exerting the same function and effect within the scope of the technical solution of the present application all fall within the technical scope of the present application. Further, within the scope without departing from the intention of the present application, other ways constructed by applying various modifications are applied to the implementations that are conceivable to those skilled in the art, and combining a part of the constituent elements of the implementations also fall within the scope of the present application.

## Claims

1. A secondary battery, comprising: a positive electrode sheet having a positive electrode active material, and a non-aqueous electrolyte, wherein
the positive electrode active material comprises a central core material and a modification layer disposed on a surface of the central core material, the modification layer comprising an orthophosphate with a molecular formula A^{a+}ₓ[PO₄]³⁻_{y}, where A denotes one or more of Li, Na, K, Rb, Cs, Mg, Ca, Ba, Ni, Fe, Co, Ti, Al, Cr, V, Nb, and W, and 1≤a≤6, and ax=3y; and
the non-aqueous electrolyte comprises a fluorinated phosphate with a molecular formula B^{b+}ₘ[PO_{1+c}F_{3-c}]^{c-}ₙ, where B denotes one or more of Li, Na, K, Rb, Cs, Mg, Ca, and Ba, 1≤b≤2, c denotes 1 or 2, and bm=cn.

2. The secondary battery according to claim 1, wherein a mass percentage of the orthophosphate is C% based on a total mass of the positive electrode active material, a mass percentage of the fluorinated phosphate is D% based on a total mass of the non-aqueous electrolyte, and the secondary battery satisfies at least one of the following conditions (1) to (3):
(1) C is 0.2-20, optionally 1-6;
(2) D is 0.1-3, optionally 0.5-2; and
(3) C×D is 0.1-15, optionally 1-5.

3. The secondary battery according to claim 1 or 2, wherein a ratio of a mass of element P in the modification layer to the total mass of the positive electrode active material is E%, where E is 0.05-6, optionally 0.2-3.

4. The secondary battery according to any one of claims 1-3, wherein the positive electrode active material has a voltage plateau >3.8V vs Li⁺/Li, optionally the voltage plateau ≥4.0V vs Li⁺/Li.

5. The secondary battery according to any one of claims 1-4, wherein the central core material comprises element Mn, and optionally, a mass percentage of the element Mn is F% based on a total mass of the central core material, where F>25.

6. The secondary battery according to any one of claims 1-5, wherein the central core material comprises one or more of spinel-type lithium manganate LiMₚMn₂₋ₚO₄, lithium manganese phosphate LiN_{q}Mn_{1-q}PO₄, and a layered manganese-rich material Li₁₊ₜMn_{1-w}L_{w}O₂₊ₜ, where 0≤p≤1, 0≤q≤0.5, 0≤t≤1, 0<w<0.5, and M, N, and L each independently denotes one or more of Ni, Co, Fe, Cr, V, Ti, Zr, La, Ce, Rb, P, W, Nb, Mo, Sb, B, Al, and Si, and
Optionally, the central core material comprises one or more of the spinel-type lithium manganate LiMₚMn₂₋ₚO₄ and the layered manganese-rich material Li₁₊ₜMn_{1-w}L_{w}O₂₊ₜ.

7. The secondary battery according to any one of claims 1-6, wherein the central core material has a monocrystalline or monocrystalline-like morphology.

8. The secondary battery according to any one of claims 1-7, wherein
A denotes one or more of Li, Na, K, Mg, Ni, Co, Ti, Al, Nb, and W, and optionally denotes one or more of Na, K, Ni, Co, Al, Nb, and W; and/or
B denotes one or more of Li, Na, K, and Mg, and optionally denotes Na, K, or a combination thereof.

9. The secondary battery according to any one of claims 1-8, wherein c denotes 2.

10. The secondary battery according to any one of claims 1-9, wherein
the orthophosphate comprises one or more of Li₃PO₄, Na₃PO₄, K₃PO₄, Mg₃(PO₄)₂, AlPO₄, Nb₃(PO₄)₅, LiNiP04, TiLi₂(PO₄)₂, and LiNi_{0.8}Co_{0.2}PO₄, and optionally comprises one or more of Na₃PO₄, K₃PO₄, AlPO₄, Nb₃(PO₄)₅, LiNiPO₄, and LiNi_{0.8}Co_{0.2}PO₄; and/or
the fluorinated phosphate comprises one or more of LiPO₂F₂, NaPO₂F₂, KPO₂F₂, Li₂PO₃F, Na₂PO₃F, and K₂PO₃F, and optionally comprises one or more of Li₂PO₃F, Na₂PO₃F, and K₂PO₃F.

11. The secondary battery according to any one of claims 1-10, wherein the modification layer is disposed on 50%-100%, optionally 85%-100%, of the surface of the central core material.

12. The secondary battery according to any one of claims 1-11, wherein
the positive electrode active material has a specific surface area less than 1.5m²/g, optionally being 0.1 m²/g-1 m²/g; and/or
the positive electrode active material has a volume particle diameter Dv50 of 1 µm-20 µm, optionally 3 µm-15 µm.

13. A battery module, comprising the secondary battery according to any one of claims 1-12.

14. A battery pack, comprising one of the secondary battery according to any one of claims 1-12, and the battery module according to claim 13.

15. An electrical device, comprising at least one of the secondary battery according to any one of claims 1-12, the battery module according to claim 13, and the battery pack according to claim 14.
